(19) Europäisches Patentamt
European Patent Office
Office européen des brevets

(11) EP 1 944 326 A1

(12) EUROPEAN PATENT APPLICATION

(43) Date of publication:
**16.07.2008 Bulletin 2008/29**

(51) Int Cl.:
***C08F 210/02*** *(2006.01)*

(21) Application number: **07000376.9**

(22) Date of filing: **09.01.2007**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicant: **Borealis Technology Oy**
**06101 Porvoo (FI)**

(72) Inventors:
- **Johansson, Kenneth**
  **444 45 Stenungsund (SE)**
- **Rydin, Peter**
  **433 60 Sävedalen (SE)**
- **Smedberg, Annika**
  **471 61 Myggenäs (SE)**

(74) Representative: **Kador & Partner**
**Corneliusstrasse 15**
**80469 München (DE)**

(54) **Method for preparing an unsaturated ethylene-diene copolymer**

(57) The present invention relates to a method for preparing an unsaturated ethylene-diene copolymer by high pressure radical-initiated polymerisation, said method providing an improved conversion of added diene into pendant vinyl groups.

EP 1 944 326 A1

## Description

Technical field

The present invention relates to an improved method for preparing an unsaturated ethylene-diene copolymer by high pressure radical-initiated polymerisation.

Technical background

Electric cables and wires are generally composed of one or several polymer layers extruded around an electric conductor(s). The electric conductor is usually coated first with an inner semiconducting layer followed by an insulating layer, and then an outer semiconducting layer. To these layers further layers may be added, such as a water barrier layer and a surrounding sheath layer (jacketing layer) applied on the outside of the said layers.

The insulating layer and the semiconducting layers normally consist of a polymer composition comprising a crosslinked polyolefin. Crosslinking substantially contributes to improve such properties of the polymer as its heat and creep resistance, mechanical strength, chemical resistance, and abrasion resistance.

Common polymeric materials for wire and cable applications comprises ethylene homo- and/or copolymers and propylene homo- and/or copolymers, including ethylene-propylene-elastomers. Normally, the insulating layer and the semiconducting layer comprises crosslinked ethylene homo- and/or copolymers, herein referred to as ethylene (co) polymers. LDPE (low density polyethylene), i.e. polyethylene prepared by radical polymerisation at high pressure, crosslinked by adding peroxide, for instance dicumyl peroxide, is today the predominant cable insulating material for power cables.

Cross-linked polyolefins, such as crosslinked ethylene homo- and/or copolymers and propylene homo- and/or copolymers, are also extensively used for pipes, such as water pipes, gas pipes, sewage pipes, coated steel pipes and aluminium multilayer pipes.

Crosslinking can be brought about by adding free-radical-forming agents (also called crosslinking or curing agents), such as peroxides, to the polymer composition prior to or during extrusion of the cable or pipe and the crosslinking is initiated by heating in a subsequent vulcanisation step, such that the peroxide is decomposed to form free radicals. These free radicals introduce the crosslinks in the material and thus build up the network structure.

In general, the degree of unsaturation of polyolefins is dependent on specific conditions chosen for the polymerisation process. This is true for high pressure as well as low pressure conditions. Normally, polyethylene produced by radical polymerisation, so-called low-density polyethylene, LDPE, has a low degree of unsaturation in the order of 0.1 vinyl groups per 1000 carbon atoms. However, in many situations, it is desirable to use polymers having a higher degree of unsaturation, which may serve as seat for chemical reactions, such as the introduction of functional groups into the polymer molecule or the cross-linking of the polymer.

In WO 9308222 it is described how the unsaturation of an ethylene copolymer can be increased by high pressure radical polymerisation of ethylene and a specific type of polyunsaturated monomer, such as an $\alpha,\omega$-alkadiene. One double bond of this polyunsaturated compound is polymerised into the polymer chain while the other double bond or bonds do not react and instead increase the unsaturation of the polymer. The non-reacted double bond(s) will be positioned at the end of short branches, thus providing pendant vinyl groups, at the site in the polymer chain where the polyunsaturated compound was incorporated by polymerisation, such that the unsaturation is uniformly distributed along the polymer chain in essentially random copolymerisation. The increased amount of unsaturation of the LDPE copolymer increases the crosslinking response when combined with a crosslinking agent.

In WO 9635732 it is described how the unsaturation of an ethylene copolymer can be increased by high pressure radical polymerisation of ethylene and a certain type of polyunsaturated $\alpha,\omega$-divinylsiloxanes. The prepared ethylene copolymers have enhanced water tree resistance and an increased degree of unsaturation.

In WO 9745465 it is described how the unsaturation of an ethylene copolymer can be increased by high pressure radical polymerisation of ethylene and a certain type of polyunsaturated $\alpha,\omega$-divinylether.

Polymerisation of ethylene (co)polymers by free radical initiated polymerisation at high pressure (referred to as high pressure radical polymerisation) is well-known in the art. Generally, the polymerisation is performed by reacting the monomers under the action of one or more radical initiators, such as peroxides, oxygen, azo compounds or combinations thereof, in a reactor at a temperature of about 80-350°C and at a pressure of about 100-400 MPa. The monomers are normally compressed in several stages up to the desired pressure before introduction into the reactor. Usually, the polymerisation is carried out continuously in either an autoclave or a tubular reactor. Monomer conversion is generally higher in a tubular reactor than in an autoclave. Besides, by polymerisation in a tubular reactor ethylene (co)polymers with a branching structure well-suited for crosslinking thereof can be provided.

Tubular reactors are either single-feed or multi-feed reactors, including split-feed reactors. In a single-feed tubular reactor (also referred to as front-feed reactor), the total monomer flow is fed to the inlet of the first reaction zone.

In a multi-feed tubular reactor, the monomers are fed into the reactor at several locations along the reactor. In a split-feed reactor, the compressed monomer mixture are split into several streams and fed into the reactor at different locations thereof.

Reaction is started by injection of the radical initiator and by an increase in temperature. The reaction mixture cools after the first reaction peak and additional initiator is added to start a second reaction zone. The number of initiator injection points determines the number of reaction zones. A tubular reactor for production of ethylene (co)polymers by high pressure radical polymerisation usually comprises a total of two to five reaction zones.

When the reaction is completed, the temperature and the pressure are lowered, typically in two steps using a high-pressure separator and a low-pressure separator. The resulting polymer is recovered and non-reacted monomers are either removed or recycled back to the reactor.

Further details of the production of ethylene (co)polymers by high pressure radical polymerisation can be found in the Encyclopedia of Polymer Science and Engineering, Vol. 6 (1986), pp 383-410.

As evident from above, copolymers of ethylene and a polyunsaturated comonomer can be produced in a high pressure reactor in different ways.

In order to have an economically efficient process it may be preferred to recover non-reacted ethylene and diene, and recycle it back to the polymerization reactor.

Furthermore, some of the diene may be lost in side-reactions, such as chain enlargement, chain transfer, cyclisation, etc.

The diene generally costs significantly more than ethylene.

Accordingly, it would be advantageous if less diene was required for said production. Thus, the target is to introduce as many pendant vinyl groups as possible with a minimum addition of diene, e.g. the conversion of added diene into pendant vinyl groups should be maximised.

Thus, it is highly desirable to obtain a higher conversion of diene into pendant vinyl groups to reduce the amount of diene monomer needed to achieve a certain degree of unsaturation in the resulting polymer.

The above-described problems and drawbacks apply for all copolymerisation reactions in a tubular reactor of ethylene and a polyunsaturated monomer, such as $\alpha,\omega$-dienes, at a pressure of about 100-400 MPa and at a temperature of about 80-350°C.

US 4306041 describes a method for obtaining improved diene conversion in coordination-catalysed low pressure polymerisation in the manufacture of EPDM type terpolymers. The polymerization reaction is conducted in a series of two or more stirred reactors with substantially all of the non-conjugated diene monomer being fed to the first reactor to thereby produce a polymer that has non-uniform diene content.

Reference is also made to EP 0738287 which describes a method for preparing an unsaturated ethylene polymer by low-pressure polymerisation of ethylene and a polyunsaturated comonomer having 8-14 carbon atoms and at least two non-conjugated double bonds, of which at least one is terminal, e.g. 1,9-decadiene. Polymerisation is performed at a polymerisation temperature of at most 120°C using a chromium catalyst which is based on chromium trioxide or chromate and which is unmodified or modified by titanation or fluoridation. The method disclosed provides an ethylene polymer having an increased degree of unsaturation while using a smaller amount of polyunsaturated commonomer.

As already mentioned, the above references relate to coordination-catalysed polymerisation. Coordination-catalysed polymerisation (also referred to as low-pressure polymerisation) and radical-initiated polymerisation (also referred to as high-pressure polymerisation) are two fundamentally different types of polymerisation, resulting in different types of polymers. While coordination-catalysed polymerisation essentially yields unbranched linear polymer molecules (unless certain co-monomers are added), radical-initiated polymerisation yields highly branched polymer molecules containing both long chain branches (LCB) and short chain branches (SCB). Consequently, polymers produced by the two processes have different properties. For instance, polymers produced by coordination-catalysed polymerisation generally have a higher density than those produced by radical-initiated polymerisation. They also have a higher melt viscosity at the same melt index, which means that the polymers produced by a radical-initiated high-pressure process are, in general, easier to process (due to the presence of LCB).

It should be emphasised that the fact that coordination-catalysed polymerisation and radical-initiated polymerisation are two fundamentally different processes means that no conclusions about one process can be drawn from the other. If, in coordination-catalysed polymerisation involving the addition of diene, only one double bond of the diene reacts, one may thus not conclude that this is also the case in radical-initiated polymerisation. Whether the diene reacts or not in coordination-catalysed polymerisation depends on the action produced by the coordination catalyst employed. Since radical-initiated polymerisation does not involve any such catalyst, there is no reason to assume that the diene will react in the same way in radical-initiated polymerisation.

Summary of the invention

An object of the present invention is to alleviate the above problems and to provide an improved process for producing an unsaturated ethylene copolymer. More specifically, an object is to provide a process for producing said unsaturated ethylene copolymer with an improved conversion of added polyunsaturated monomer into desired pendant vinyl groups in the final polymer.

According to a first aspect of the invention, this object is achieved with a method for preparing said unsaturated ethylene copolymer by radical-initiated polymerisation of ethylene and at least one monomer including a polyunsaturated compound selected from the group consisting of

(i) a polyunsaturated compound having a straight carbon chain which is free from heteroatoms and has at least 8 carbon atoms and at least 4 carbon atoms between two non-conjugated double bonds, of which at least one is terminal, such as 1,7-octadiene, 1,9-decadiene, 1,11-dodecadiene and 1,13-tetradecadiene,
(ii) an $\alpha,\omega$-divinylsiloxane according to Formula I

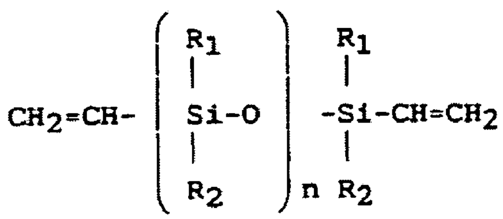

(I)

wherein $R_1$ and $R_2$, which can be alike or different, are selected among alkyl groups having 1-4 carbon atoms and alkoxy groups having 1-4 carbon atoms, and n is 1-200, such as tetramethyl divinyldisiloxane and divinyl poly (dimethylsiloxanes),
(iii) an $\alpha,\omega$-divinylether of formula (II)

$$H_2C = CH\text{-}O\text{-}R\text{-}CH = CH_2 \qquad (II)$$

wherein R is $-(CH_2)_m-O-$, $-(CH_2CH_2O)_n-$, or $-CH_2-C_6H_{10}-CH_2-O-$, m is 2-10 and n is 1-5, such as 1,4-butanediol divinyl ether, and
(iv) any combinations thereof,
at a pressure of about 100-400 MPa and at a temperature of about 80-350°C in a multi-zone reactor, such as a tubular reactor, comprising two or more reaction zones,

wherein more than 50% by weight of the total amount of polyunsaturated compound added to the reactor is introduced into the first reaction zone of the reactor.

More specifically, more than 90% by weight of the polyunsaturated compound is advantageously introduced into the first reaction zone of the reactor and most preferred all the polyunsaturated compound is added into the first reaction zone.

Other features and advantages of the present invention will become apparent from the following

description of the invention.

Detailed description of the invention

The invention relates to a method for preparing an unsaturated ethylene copolymer by radical-initiated polymerisation of ethylene and at least one monomer, copolymerisable with ethylene, including a polyunsaturated compound selected from the group consisting of

(i) a polyunsaturated compound having a straight carbon chain which is free from heteroatoms and has at least 8 carbon atoms and at least 4 carbon atoms between two non-conjugated double bonds, of which at least one is terminal,
(ii) an $\alpha,\omega$-divinylsiloxane according to Formula I

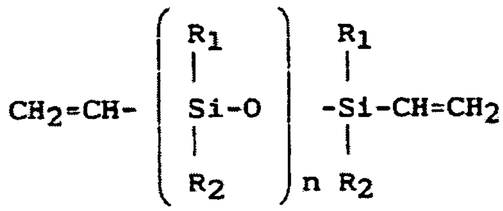

(I)

wherein $R_1$ and $R_2$, which can be alike or different, are selected among alkyl groups having 1-4 carbon atoms and alkoxy groups having 1-4 carbon atoms, and n is 1-200,
(iii) an $\alpha,\omega$-divinylether of formula (II)

$$H_2C = CH\text{-}O\text{-}R\text{-}CH = CH_2 \qquad (II)$$

wherein R is $-(CH_2)_m-O-$, $-(CH_2CH_2O)_n-$, or $-CH_2-C_6H_{10}-CH_2-O-$, m is 2-10 and n is 1-5, and
(iv) any combinations thereof,
at a pressure of about 100-400 MPa and at a temperature of about 80-350°C in a multi-zone reactor, such as a tubular reactor, comprising two or more reaction zones,

wherein more than 50% by weight of the total amount of polyunsaturated compound added to the reactor is introduced into the first reaction zone of the reactor.

As used herein the term "copolymer" includes polymers produced by copolymerising two or more monomers, e.g. three or four monomers as well.

It shall be noted that the above mentioned temperature range include the initiating temperature as well as the peak temperature.

Advantageously more than 60% by weight, such as 70-100% by weight, in particular 80-100% by weight, more specifically 90-100% by weight, of the total amount of added polyunsaturated compound added to the reactor is introduced into the first reaction zone of the reactor.

Most advantageously, essentially all of the added polyunsaturated compound is introduced into the first reaction zone of the reactor, i.e. more than 90% by weight.

As used herein the term "essentially all" of monomer X means at least 90% by weight, in particular at least 95% and more particularly 99-100%, of the total amount of monomer X added to the reactor.

In the best embodiment of the method according to the invention, all polyunsaturated compound is introduced into the first reaction zone of the reactor.

It has been found that when a greater portion of the total amount of polyunsaturated compound added to the reactor is introduced into the first reaction zone of the reactor, an increased conversion of added polyunsaturated monomer into pendant vinyl groups in the final polymer, i.e. a better yield, is provided. The best yield is obtained when essentially all of the added polyunsaturated compound is introduced into the first reaction zone of the reactor, i.e. by front-feeding the polyunsaturated monomer into the reactor.

The ethylene can either be introduced into the reactor by front-feeding (i.e. essentially all ethylene is introduced into the first reaction zone of the reactor) or by multi-feeding (i.e. ethylene is fed into two reaction zones or more).

In the context of the present invention, the term "total amount of carbon-carbon double bonds" refers to those double bonds originating from vinyl groups, vinylidene groups and trans-vinylene groups. The amount of each type of double bond is measured as indicated in the experimental part. The incorporation of the total amount of carbon-carbon double bonds according to the present invention within the polyolefin component enables to accomplish improved crosslinking properties.

The unsaturated ethylene-diene copolymer produced using the method according to the invention has a total amount of carbon-carbon double bonds/1000 carbon atoms of at least 0.1. In particular, the total amount of carbon-carbon double bonds in said unsaturated copolymer is at least 0.15, such as at least 0.20, at least 0.25, at least 0.30, at least 0.35, at least 0.40, at least 0.45, at least 0.50, at least 0.55, at least 0.60, at least 0.65, at least 0.70, at least 0.75, at least 0.80, at least 0.90 or at least 1.0/1000 C-atoms.

The total amount of vinyl groups in said unsaturated copolymer is advantageoulsy at least 0.04/1000 carbon atoms, in particular at least 0.08, such as at least 0.10, at least 0.15, at least 0.20, at least 0.25, at least 0.30, at least 0.35, at least 0.40, at least 0.45, at least 0.50, at least 0.55, at least 0.60, at least 0.65, at least 0.70, at least 0.75 or at least 0.80 vinyl groups/1000 carbon atoms.

Of course, since a vinyl group is a specific type of carbon-carbon double bond, the total amount of vinyl groups for a given unsaturated ethylene-diene copolymer does not exceed its total amount of double bonds.

Two types of vinyl groups can be differentiated. One type of vinyl group is generated by the polymerisation process (e.g. via a β-scission reaction of a secondary radical) or results from the use of chain transfer agents, such as propylene, introducing vinyl groups (these vinyl groups are also referred to as terminal vinyl groups). Another type of vinyl group may originate from a polyunsaturated comonomer used for the preparation of the unsaturated polyolefin.

The amount of vinyl groups originating from the polyunsaturated comonomer (also referred to as pendant vinyl groups) in said unsaturated ethylene-diene copolymer is advantageoulsy at least 0.03/1000 carbon atoms, in particular at least 0.06, such as at least 0.09, at least 0.12, at least 0.15, at least 0.18, at least 0.21, at least 0.25, at least 0.30, at least 0.35 or at least 0.40/1000 carbon atoms.

The polyunsaturated compound used in the method according to the invention is advantageously a polyunsaturated compound selected from groups i) and/or ii) referred to above, more specifically a polyunsaturated compound selected from group i).

In a first group of embodiments of the method according to the invention, the polyunsaturated compound is a compound having a straight carbon chain which is free from heteroatoms and has at least 8 carbon atoms, in particular 8-16 carbon atoms, more particularly 8-12 carbon atoms, and at least 4 carbon atoms between two non-conjugated double bonds, of which at least one is terminal, such as an α,ω-alkadiene.

Said polyunsaturated compound, according to this first group of embodiments, should have a straight chain, since each tertiary or allylic hydrogen atom increases the risk of chain transfer.

Furthermore, said polyunsaturated compound, according to this first group of embodiments, is not substituted, i.e. it consists of an unsubstituted straight-chain hydrocarbon having at least two non-conjugated double bonds.

Examples of suitable alkadienes for use in the manufacturing of said ethylene copolymer are 1,7-octadiene, 1,9-decadiene, 1,11-dodecadiene, 1,13-tetradecadiene, or mixtures thereof. Furthermore, dienes like 7-methyl-1,6-octadiene, 9-methyl-1,8-decadiene, or mixtures thereof can be mentioned.

For this first group of embodiments of the invention, it has been found desirable that the ethylene copolymer comprises 0.03-5% by weight, in particular 0.05-4% by weight, more particularly 0.1-1.5% by weight, of moieties derived from said polyunsaturated compound.

It shall be noted that a combination of two or more polyunsaturated compounds, according to this first group of embodiments, can be used for producing said ethylene copolymer according to the method of the invention.

In a second group of embodiments of the method according to the invention, the polyunsaturated compound is an α,ω-divinylsiloxane according to Formula I

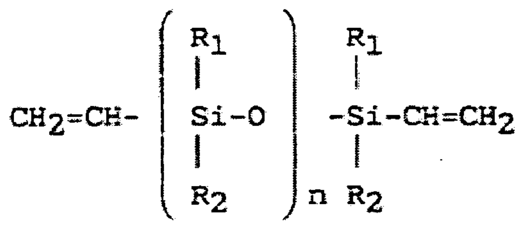

(I)

wherein $R_1$ and $R_2$, which can be alike or different, are selected among alkyl groups having 1-4 carbon atoms and alkoxy groups having 1-4 carbon atoms, and n is 1-200,

For an optimum result, the distance between the double bonds of the polyunsaturated comonomer of formula I should not be too great. This is expressed by the value of n in formula I. Generally, n is 1-200 and in view of commercial accessibility, in particular n is 1-100. More specifically, n is 1-50 owing to the higher addition of double bonds in proportion to the weight content of siloxane comonomer included in the copolymer.

It has been found advantageous that $R_1$ and $R_2$ are alike. Most advantageously, $R_1$ and $R_2$ are methyl, methoxy or ethoxy.

Examples of suitable α,ω-siloxanes are tetramethyl divinyldisiloxane and divinyl poly(dimethylsiloxanes).

For this second group of embodiments of the invention, it has been found desirable that the ethylene copolymer comprises 0.03-10% by weight, in particular 0.05-8% by weight, more particularly 0.1-5% by weight, of moieties derived from said α,ω-siloxanes.

It shall be noted that a combination of two or more α,ω-siloxanes can be used for producing said ethylene copolymer according to the method of the invention.

In a third group of embodiments of the method according to the invention, the polyunsaturated compound is a α,ω-divinylether of formula (II)

$$H_2C = CH\text{-}O\text{-}R\text{-}CH = CH_2 \qquad (II)$$

wherein R is $-(CH_2)_m-O-$, $-(CH_2CH_2O)_n-$, or $-CH_2-C_6H_{10}-CH_2-O-$, m is 2-10 and n is 1-5.

As indicated in the foregoing, R in formula (II) may, inter alia, stand for $-(CH_2)_m-O-$, wherein m is 2-10. When m is 2, formula (II) signifies ethylene glycol divinyl ether, and when m is 4, 6, 8 and 10, formula (II) signifies 1,4-butanediol divinyl ether, 1,6-hexanediol divinyl ether, 1,8-octanediol divinyl ether and 1,10-decanediol divinyl ether, respectively. Most preferred is 1,4-butanediol divinyl ether.

Further, R in formula (II) may also stand for- $(CH_2CH_2O)_n$, wherein n is 1-5. When n is 1, formula (II) signifies ethylene glycol divinyl ether as above, and when n is 2, 3, 4 and 5, formula (II) signifies diethylene glycol divinyl ether, triethylene glycol divinyl ether, tetra ethylene glycol divinyl ether and pentaethylene glycol divinyl ether, respectively.

When R in formula (II) stands for $-CH_2-C_6H_{10}-CH_2-O-$, formula (II) signifies cyclohexane dimethanol divinyl ether.

Among the above examples of possible significations of formula (II), 1,4-butanediol divinyl ether is currently the most suitable compound to use.

For this third group of embodiments of the invention, it has been found desirable that the ethylene copolymer comprises 0.03-5% by weight, in particular 0.05-2% by weight, more particularly 0.1-1.5% by weight, of moieties derived from said $\alpha,\omega$-divinylether.

It shall be noted that a combination of two or more $\alpha,\omega$-divinylethers can be used for producing said ethylene copolymer according to the method of the invention.

It shall also be noted that a combination of two or more polyunsaturated compounds selected from the above described groups of alkadienes, $\alpha,\omega$-divinylsiloxanes and $\alpha,\omega$-divinylethers can be used for producing said ethylene copolymer according to the method of the invention.

Moreover, the copolymerisation may be implemented in the presence of one or more other comonomers. In addition to ethylene and said at least one polyunsaturated comonomer, the ethylene polymer produced according to the method of the invention may contain up to, for instance, 40% by weight of at least one additional monomer which is copolymerisable with ethylene and the polyunsaturated compound. Such monomers are well-known to the expert and need not be accounted for in greater detail here.

Mention may, however, be made of olefinically, advantageously vinylically, unsaturated monomers, such as $C_3$-$C_{20}$ $\alpha$-olefins, e.g. propylene, 1-butene, 1-hexene and 1-nonene.

Propylene and higher $\alpha$-olefins may be regarded as a special case, since they also act as chain-transfer agents and create terminal unsaturation in the polymer (Encyclopedia of Polymer Sciences and Technology, Rev. Ed., Vol. 6 (1986), pp 394-395). Using propylene (or some other higher $\alpha$-olefin) as comonomer in addition to the polyunsaturated comonomer defined above thus makes it possible to further increase the degree of unsaturation of the produced copolymer in a comparatively simple and inexpensive manner.

It is also possible to use polar olefinically, advantageously vinylically, unsaturated monomers containing at least one functional group, optionally in combination with the $C_3$-$C_{20}$ comonomer(s), such as compounds containing hydroxyl groups, alkoxy groups, carbonyl groups, carboxyl groups and ester groups.

Examples of such comonomers are alkyl acrylates, such as $C_{1-6}$-alkyl acrylates; alkyl methacrylates, such as $C_{1-6}$-alkyl methacrylates; and vinyl acetates. Specific examples of suitable polar monomers are methyl, ethyl, propyl and butyl (meth)acrylates.

Thus, olefinically, advantageously vinylically, additional comonomers include (a) vinyl carboxylate esters, such as vinyl acetate and vinyl pivalate, (b) $\alpha$-olefins, such as propene, 1-butene, 1-hexene, 1-octene and 4-methyl-1-pentene, (c) (meth)acrylates, such as methyl(meth)acrylate, ethyl(meth)acrylate and butyl(meth)acrylate, (d) vinylically unsaturated carboxylic acids, such as (meth)acrylic acid, maleic acid and fumaric acid, (e) (meth)acrylic acid derivatives, such as (meth)acrylonitrile and (meth)acrylic amide, (f) vinyl ethers, such as vinyl methyl ether and vinyl phenyl ether, (g) aromatic vinyl compounds, such as styrene and alpha-methyl styrene, and vinylically unsaturated, hydrolysable silane monomers. Two or more such olefinically unsaturated compounds may be used in combination.

If additional comonomer(s), i.e. besides ethylene and the polyunsaturated monomer, is used in the method of the invention, it can be introduced into the reactor either by front-feeding in a single stream or multi-feeding in two of more streams, including split-feeding thereof.

As apparent for persons skilled in the art, the ethylene copolymer produced according to the method of the invention can be cross-linked by subjecting the copolymer to an elevated temperature in the presence of a cross-linking agent.

Generally, the ethylene copolymer starts to crosslink at about 160°C depending on the type of crosslinking agent used. The temperature of the vulcanization tube is usually up to about 400°C. Thus, the ethylene copolymer according to the invention can be used in a crosslinkable composition comprising a crosslinking agent.

In the context of the present invention, a crosslinking agent is defined to be any compound capable to generate radicals which can initiate a crosslinking reaction. Preferably, the crosslinking agent contains at least one -O-O- bond or at least one -N=N- bond. More preferably, the crosslinking agent is a peroxide known in the field.

Examples of suitable crosslinking agents are di-tert-amylperoxide; 2,5-di(tert-butylperoxy)-2,5-dimethyl-3-hexyne; 2,5-di(tert-butylperoxy)-2,5-dimethylhexane; tert-butylcumylper-oxide; di(tert-butyl)peroxide; dicumylperoxide; di(tert-butylperoxy-isopropyl)benzene; butyl-4,4-bis(tert-butylperoxy)valerate; 1,1-bis(tert-butylperoxy)-3,3,5-trimethylcyclohexane; tert-butylperoxybenzoate; dibenzoylperoxide or mixtures thereof.

The crosslinking agent is advantageously selected from the group consisting of 2,5-di(tert-butylperoxy)-2,5-dimethyl-hexane; di(tert-butylperoxy-isopropyl)-benzene; dicumylperoxide; tert-butylcumylperoxide; di(tert-butyl)peroxide; or any combination thereof.

The crosslinking agent is advantageously added in an amount of 0.1-3.0% by weight, in particular 0.15-2.6% by weight, more particularly 0.2-2.2% by weight, based on the weight of the crosslinkable polymer composition.

As is usually the case for polymer compositions, the crosslinkable polymer composition may also contain various other additives, such as thermoplastics, antioxidants, stabilisers, processing aids, lubricants, retardant additives, acid scavengers, fillers, colouring agents, foaming agents, crosslinking boosters, scorch retardants and water tree retardant additives.

Examples of crosslinking boosters are compounds having a vinyl and/or an allyl group, e.g. triallylcyanurate, triallylisocyanurate, and di-, tri- or tetraacrylates.

As to the thermoplastics added, mention may be made of polyolefins, such as polyethylene of low density, medium density and high density, polypropylene, chlorinated polyethylene, as well as various copolymers including ethylene and one or more other comonomers, e.g. vinyl acetate, methyl acrylate, acrylate, propene, butene, hexene and the like. One may use either a single polyolefin or a mixture of several polyolefins.

As to fillers, mention may be made of inorganic fillers, such as silicates, e.g. kaolin, talc, montmorillonite, zeolite, mica, silica, calcium silicate, powdered glass, glass fibre, calcium carbonate, gypsum, magnesium carbonate; magnesium hydroxide, aluminium hydroxide, carbon black and titanium oxide. The content of the inorganic filler may be up to 60% by weight, as based on the sum of the weights of the filler and the ethylene copolymer of the invention.

As mentioned by way of introduction, the polymers produced by the method according to the present invention are intended to be used when a polymer with reactive sites in the form of unsaturation is desired. The unsaturation can be used to incorporate functional groups, such as hydroxyl, carboxyl and the like, into the polymer, by reaction with compounds containing such functional groups. The ethylenical unsaturation can also, and perhaps above all, be used to cross-link the polymer.

It appears from the foregoing that the unsaturated ethylene copolymer produced by the method according to the invention can be used as material for semiconducting layers, insulating layers and/or sheath layers of electric cables.

Other applications for the polymer produced by the method according to the invention may, however, also be contemplated such as pipes, particularly water pipes and gas pipes, and products made by injection or rotational moulding.

The invention will now be illustrated by means of the following non-limiting examples.

Method to determine the amount of double bonds in ethylene-diene copolymers comprising $CH_2$=CH-$CH_2$-

The procedure for the determination of the amount of double bonds/1000 C-atoms is based upon the ASTM D3124-72 method. In that method, a detailed description for the determination of vinylidene groups/1000 C-atoms is given based on 2,3-dimethyl-1,3-butadiene. This sample preparation procedure has also been applied for the determination of vinyl groups/1000 C-atoms, vinylidene groups/1000 C-atoms and trans-vinylene groups/1000 C-atoms in the present invention. However, for the determination of the extinction coefficient for these three types of double bonds, the following three compounds have been used: 1-decene for vinyl, 2-methyl-1-heptene for vinylidene and trans-4-decene for trans-vinylene, and the procedure as described in ASTM-D3124 section 9 was followed.

The total amount of double bonds was analysed by means of IR spectrometry and given as the amount of vinyl bonds, vinylidene bonds and trans-vinylene bonds, respectively.

Thin films were pressed with a thickness of 0.5-1.0 mm. The actual thickness was measured. FT-IR analysis was performed on a Perkin Elmer 2000. Four scans were recorded with a resolution of 4 $cm^{-1}$.

A base line was drawn from 980 $cm^{-1}$ to around 840 $cm^{-1}$. The peak heights were determined at around 888 $cm^{-1}$ for vinylidene, around 910 $cm^{-1}$ for vinyl and around 965 $cm^{-1}$ for trans-vinylene. The amount of double bonds/1000 carbon atoms was calculated using the following formulas (ASTM D3124-72):

$$\text{vinylidene/1000 C-atoms} = (14 \times A)/(18.24 \times L \times D)$$

$$\text{vinyl/1000 C-atoms} = (14 \times A)/(13.13 \times L \times D)$$

$$\text{trans-vinylene/1000 C-atoms} = (14 \times A)/(15.14 \times L \times D)$$

wherein

A: absorbance (peak height)
L: film thickness in mm
D: density of the material

The total amount of vinyl groups of each polymer was determined by FT-IR measurements, as described above. Then, it is assumed that the base level of vinyl groups, i.e. the ones formed by the process without the addition of chain transfer agent resulting in vinyl groups and without the presence of a polyunsaturated comonomer, is the same for a reference homopolymer and for the unsaturated polymer (these polymers have been produced on the same reactor, basically using the same conditions, i.e. similar temperature, pressure and production rate). This base level is then subtracted from the measured amount of vinyl groups in the unsaturated polymer, thereby resulting in the amount of vinyl groups/1000 C-atoms, which result from the polyunsaturated comonomer.
In the case of ethylene-divinyleter copolymers, a peak at around 810 $cm^{-1}$ is used instead for determination of the amount of the number of pendant vinyl groups. For the determination of the total number of vinyl groups both the contribution from around 910 $cm^{-1}$ and 810 $cm^{-1}$ are used. For the quantification of the 810 $cm^{-1}$ the same extinction coefficients as for the vinyl groups given above was used.
In the case of ethylene-divinylsiloxane copolymers, a peak at around 954 $cm^{-1}$ is used instead for determination of the amount of pendant vinyl groups.

<u>Comparison example 1</u>

An ethylene-1,7-octadiene copolymer was produced by radical polymerisation in a tubular reactor.
The pressure in the reactor was about 210-240 MPa and the temperature was within the range of 120-330°C with an average temperature of about 210°C.
An organic peroxide and oxygen were used as radical initiators.
Methyl-ethyl ketone was used as chain-transfer agent.
The reactor contained two reaction zones.
The reactor was supplied with about 27 000 kg ethylene/h and about 46 kg 1,7-octadiene/h.
50% by weight of the ethylene was fed to the first reaction zone and 50% by weight was fed to the second reaction zone.
33% by weight of the 1,7-octadiene was fed to the first reaction zone and 67% by weight of the 1,7-octadiene was fed to the second reaction zone.
The feed of 1,7-octadiene was controlled in such a way that the amount of diene and ethylene in each feed corresponded to the conversion of ethylene to polymer in the zone where addition was made.
The polymerisation yielded about 6 200 kg polymer/h.
The chain transfer agent was added in such an amount that the copolymer formed had a melt flow rate ($MFR_2$) of 1.90 g/10 min, measured according to ISO 1133.
The density of the polymer produced was 923 $kg/m^3$, measured according to ISO 1183:1987-D.
When analysed by the above described FT-IR method, the copolymer was found to have a content of vinyl groups of about 0.28 per 1000 carbon atoms.
An ethylene homopolymer ($MFR_2$ = 1.90 g/10 min, density = 923 $kg/m^3$) having a content of vinyl groups of about 0.14 per 1000 carbon atoms was used as reference polymer. This reference polymer was produced using similar process conditions.
This means that about 14.9% of the 1,7-octadiene supplied to the reactor was converted into desired pendant vinyl groups in the final polymer.

<u>Example 1</u>

An ethylene-1,7-octadiene copolymer was produced by radical polymerisation in a tubular reactor.
The pressure in the reactor was about 210-240 MPa and the temperature was within the range of 120-330°C with an average temperature of about 210°C.
An organic peroxide and oxygen were used as radical initiators.
Methyl-ethyl ketone was used as chain-transfer agent.

The reactor contained two reaction zones.

The reactor was supplied with about 27 000 kg ethylene/h and about 49 kg 1,7-octadiene/h.

50% by weight of the ethylene was fed to the first reaction zone and 50% by weight was fed to the second reaction zone.

100% by weight of the 1,7-octadiene was fed to the first reaction zone.

The polymerisation yielded about 6 000 kg polymer/h.

The chain transfer agent was added in such an amount that the copolymer formed had a melt flow rate ($MFR_2$) of 1.90 g/10 min, measured according to ISO 1133.

The density of the polymer produced was 923 kg/$m^3$, measured according to ISO 1183:1987-D.

When analysed by the above described FT-IR method, the copolymer was found to have a content of vinyl groups of about 0.32 per 1000 carbon atoms.

This means that about 18.7% of the 1,7-octadiene supplied to the reactor was converted into desired pendant vinyl groups in the final polymer.

Example 2

Example 1 is repeated except that the reactor was supplied with about 27 000 kg ethylene/h and about 26 kg 1,7-octadiene/h.

When analysed by the above described FT-IR method, the copolymer was found to have a content of vinyl groups of about 0.24 per 1000 carbon atoms.

This means that about 20.1% of the 1,7-octadiene supplied to the reactor was converted into desired pendant vinyl groups in the final polymer.

Example 3

Example 1 was repeated except that 1,4-butanediol divinyl ether was used instead of 1,7-octadiene.

The reactor was supplied with about 27 000 kg ethylene/h and about 115 kg divinylether/h.

The polymerisation yielded about 5 500 kg polymer/h.

The chain transfer agent was added in such an amount that the copolymer formed had a melt flow rate ($MFR_2$) of 2 g/10 min, measured according to ISO 1133.

The density of the polymer produced was 922 kg/$m^3$, measured according to ISO 1183:1987-D.

When analysed by the above described FT-IR method, the copolymer was found to have a total content of vinyl groups of about 0.39 per 1000 carbon atoms of which 0.27 per 1000 carbon atoms are of the pendant type.

This means that about 15-20% of the divinylether supplied to the reactor was converted into desired pendant vinyl groups in the final polymer.

Example 4

Example 1 is repeated except that tetramethyl divinyldisiloxane is used instead of 1,7-octadiene.

While the invention has been described in detail and with reference to specific embodiments thereof, it will be apparent for one skilled in the art that various changes and modifications can be made therein without departing from the spirit and scope thereof.

## Claims

**1.** A method for preparing an unsaturated ethylene-diene copolymer by radical-initiated polymerisation of ethylene and at least one monomer including a polyunsaturated compound selected from the group consisting of

(i) a polyunsaturated compound having a straight carbon chain which is free from heteroatoms and has at least 8 carbon atoms and at least 4 carbon atoms between two non-conjugated double bonds, of which at least one is terminal,

(ii) an $\alpha,\omega$-divinylsiloxane according to Formula I

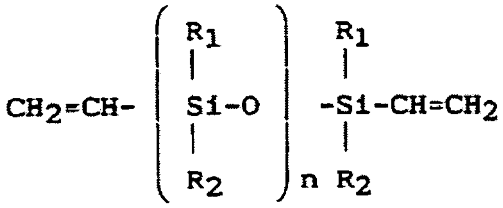

(I)

wherein $R_1$ and $R_2$, which can be alike or different, are selected among alkyl groups having 1-4 carbon atoms and alkoxy groups having 1-4 carbon atoms, and n is 1-200,
(iii) an α,ω-divinylether of formula (II)

$$H_2C = CH\text{-}O\text{-}R\text{-}CH = CH_2 \qquad (II)$$

wherein R is $-(CH_2)_m-O-$, $-(CH_2CH_2O)_n-$, or $-CH_2-C_6H_{10}-CH_2-O-$, m is 2-10 and n is 1-5, and
(iv) any combinations thereof,
at a pressure of about 100-400 MPa and at a temperature of about 80-350°C in a multi-zone reactor comprising two or more reaction zones,

**characterised in that** more than 50% by weight of the total amount of polyunsaturated compound added to the reactor is introduced into the first reaction zone of the reactor.

**2.** A method according to claim 1, wherein more than 90% by weight of the polyunsaturated compound is introduced into the first reaction zone of the reactor and most preferred all the polyunsaturated compound is introduced into the first reaction zone.

**3.** A method according to any one of the preceding claims, wherein the multi-zone reactor is a tubular reactor.

**4.** A method according to any one of the preceding claims, wherein the polyunsaturated compound is an α,ω-diene.

**5.** A method according to any one of the preceding claims, wherein the polyunsaturated compound is an α,ω-divinylsiloxane according to Formula I and comprises 0.03-10% by weight of the ethylene copolymer.

**6.** A method according to any one of the preceding claims, wherein the polyunsaturated compound is an α,ω-divinylsiloxane according to Formula I wherein $R_1$ and $R_2$ are alike and selected from the group consisting of methyl, methoxy and ethoxy, and n is 1-50.

**7.** A method according to any one of the preceding claims, wherein the polyunsaturated compound is selected from the group consisting of tetramethyl divinyldisiloxane, divinyl poly(dimethylsiloxane) and a combination thereof.

**8.** A method according to any one of claims 1-4, wherein the polyunsaturated compound is a compound of group i) and comprises 0.03-5% by weight of the ethylene copolymer.

**9.** A method according to any one of claims 1-4 and 9, wherein the polyunsaturated compound is an α,ω-alkadiene of group i) having 8-16 carbon atoms.

**10.** A method according to claim 9, wherein the α,ω-alkadiene is selected from the group consisting of 1,7-octadiene, 1,9-decadiene, 1,11-dodecadiene, 1,13-tetradecadiene and any combinations thereof.

**11.** A method according to any one of claims 1-4, wherein the polyunsaturated compound is a compound according to Formula II and comprises 0.03-5% by weight of the ethylene copolymer.

**12.** A method according to any one of claims 1-4 and 11, wherein the polyunsaturated compound is a compound according to Formula II wherein m is 4 or 6.

**13.** A method according to any one of claims 1-4 and 11, wherein the polyunsaturated compound according to Formula II is 1,4-butanediol divinyl ether.

**14.** A method according to any one of the preceding claims, wherein the ethylene is copolymerised with said polyunsaturated compound and at least one additional olefinically unsaturated monomer.

**15.** A method according to claim 14, wherein said at least one additional olefinically unsaturated monomer is selected from the group consisting of vinyl carboxylate esters, $\alpha$-olefins, (meth)acrylates, vinylically unsaturated carboxylic acids, (meth)acrylic acid derivatives, vinyl ethers, aromatic vinyl compounds, and any combinations thereof.

European Patent Office

# EUROPEAN SEARCH REPORT

Application Number
EP 07 00 0376

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,X | WO 93/08222 A (NESTE OY [FI]) 29 April 1993 (1993-04-29) | 1-4, 8-10,14, 15 | INV. C08F210/02 |
| Y | * the whole document * | 1-3,5-7, 11-15 | |
| D,Y | WO 96/35732 A (BOREALIS AS [DK]; GUSTAFSSON BILL [SE]; LAURELL JUSSI [FI]) 14 November 1996 (1996-11-14) * the whole document * | 1-3,5-7, 14,15 | |
| D,Y | WO 97/45465 A (BOREALIS AS [DK]; GUSTAFSSON BILL [SE]; LAURELL JUSSI [FI]) 4 December 1997 (1997-12-04) * the whole document * | 1-3, 11-15 | |

TECHNICAL FIELDS SEARCHED (IPC)

C08F

The present search report has been drawn up for all claims

| Place of search | Date of completion of the search | Examiner |
|---|---|---|
| Munich | 20 September 2007 | Van Golde, Lambertus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent Office

Application Number

EP 07 00 0376

## CLAIMS INCURRING FEES

The present European patent application comprised at the time of filing more than ten claims.

- [ ] Only part of the claims have been paid within the prescribed time limit. The present European search report has been drawn up for the first ten claims and for those claims for which claims fees have been paid, namely claim(s):

- [ ] No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

- [X] All further search fees have been paid within the fixed time limit. The present European search report has been drawn up for all claims.

- [ ] As all searchable claims could be searched without effort justifying an additional fee, the Search Division did not invite payment of any additional fee.

- [ ] Only part of the further search fees have been paid within the fixed time limit. The present European search report has been drawn up for those parts of the European patent application which relate to the inventions in respect of which search fees have been paid, namely claims:

- [ ] None of the further search fees have been paid within the fixed time limit. The present European search report has been drawn up for those parts of the European patent application which relate to the invention first mentioned in the claims, namely claims:

European Patent Office

LACK OF UNITY OF INVENTION SHEET B

Application Number

EP 07 00 0376

The Search Division considers that the present European patent application does not comply with the requirements of unity of invention and relates to several inventions or groups of inventions, namely:

1. claims: 1-4,8-10,14,15

A method for preparing an unsaturated ethylene-diene copolymer by radical-initiated polymerisation of ethylene and at least one monomer including a polyunsaturated compound selected from the group consisting of a polyunsaturated compound having a straight carbon chain which is free from heteroatoms and has at least 8 carbon atoms and at least 4 carbon atoms between two non-conjugated double bonds, of which at least one is terminal at a pressure of about 100-400 MPa and at a temperature of about 80-350°C in a multi-zone reactor comprising two or more reaction zones, chracterized in that more than 50 % by weight of the total amount of polyunsaturated compound added to the reactor is introduced into the first reaction zone of the reactor.

---

2. claims: 1-3,6,7,14,15

A method for preparing an unsaturated ethylene-diene copolymer by radical-initiated polymerisation of ethylene and at least one monomer including a polyunsaturated compound selected from the group consisting of alpha,omega-divinylsiloxanes according to Formula (I) at a pressure of about 100-400 MPa and at a temperature of about 80-350°C in a multi-zone reactor comprising two or more reaction zones, chracterised in that more than 50 % by weight of the total amount of polyunsaturated compound added to the reactor is introduced into the first reaction zone of the reactor.

---

3. claims: 1-3,11-15

A method for preparing an unsaturated ethylene-diene copolymer by radical-initiated polymerisation of ethylene and at least one monomer including a polyunsaturated compound selected from the group consisting of alpha,omega-divinylethers according to Formula (II) at a pressure of about 100-400 MPa and at a temperature of about 80-350°C in a multi-zone reactor comprising two or more reaction zones, chracterised in that more than 50 % by weight of the total amount of polyunsaturated compound added to the reactor is introduced into the first reaction zone of the reactor.

---

## ANNEX TO THE EUROPEAN SEARCH REPORT ON EUROPEAN PATENT APPLICATION NO. EP 07 00 0376

This annex lists the patent family members relating to the patent documents cited in the above-mentioned European search report.
The members are as contained in the European Patent Office EDP file on
The European Patent Office is in no way liable for these particulars which are merely given for the purpose of information.

20-09-2007

| Patent document cited in search report | Publication date | Patent family member(s) | Publication date |
|---|---|---|---|
| WO 9308222 A | 29-04-1993 | AU 657997 B2 | 30-03-1995 |
| | | AU 2465992 A | 21-05-1993 |
| | | CA 2120141 A1 | 29-04-1993 |
| | | DE 69215697 D1 | 16-01-1997 |
| | | DE 69215697 T2 | 19-06-1997 |
| | | DE 647244 T1 | 09-11-1995 |
| | | EP 0647244 A1 | 12-04-1995 |
| | | ES 2094927 T3 | 01-02-1997 |
| | | JP 3004358 B2 | 31-01-2000 |
| | | JP 7500621 T | 19-01-1995 |
| | | PL 170336 B1 | 29-11-1996 |
| | | US 5539075 A | 23-07-1996 |
| WO 9635732 A | 14-11-1996 | AT 179189 T | 15-05-1999 |
| | | DE 69602185 D1 | 27-05-1999 |
| | | DE 69602185 T2 | 14-10-1999 |
| | | EP 0824555 A1 | 25-02-1998 |
| | | SE 504364 C2 | 20-01-1997 |
| | | SE 9501749 A | 13-11-1996 |
| WO 9745465 A | 04-12-1997 | AU 3111497 A | 05-01-1998 |
| | | SE 507045 C2 | 23-03-1998 |
| | | SE 9602125 A | 01-12-1997 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 9308222 A
- WO 9635732 A
- WO 9745465 A
- US 4306041 A
- EP 0738287 A


### Non-patent literature cited in the description


- Encyclopedia of Polymer Science and Engineering. 1986, vol. 6, 383-410
- Encyclopedia of Polymer Sciences and Technology, Rev. Ed. 1986, vol. 6, 394-395